# EUROPEAN PATENT APPLICATION

(11) **EP 4 318 357 A1**
(43) Date of publication of application: **07.02.2024**
(21) Application number: 22779709.9
(22) Date of filing: 25.02.2022
(51) Int. Cl.: G06Q 30/02

(54) **ADVERTISEMENT DELIVERY SYSTEM AND ADVERTISEMENT DELIVERY METHOD**

(30) Priority: 29.03.2021 JP 2021055834
(71) Applicant: Yazaki Corporation, Tokyo, 108-0075 (JP)
(72) Inventor: IKEGAYA Koji, Susono-shi, Shizuoka 410-1194 (JP)
(74) Representative: Hoffmann Eitle
(86) International application number: PCT/JP2022/007913
(87) International publication number: WO 2022/209484

(57) **Abstract**

The users of parking lots are preliminarily registered as registered users in a parking lot application (10) that manages a parking lot in each place, and the advertisement created by each advertiser is automatically delivered by the parking lot application (10), with the registered users associated with parking lots being adopted as delivery destinations. The delivery destinations of an advertisement can be limited to the registered users of a parking lot that is close in distance from the store managed by the advertiser. An advertisement delivery time can be designated. The user attributes of advertisement delivery destinations can be designated. The advertisement created by an advertiser is automatically checked and is registered only when no problems are found, thereby increasing advertisement reliability. An advertisement creation tool is provided to advertisers, and fees are charged in accordance with the state in which it is utilized.

## Description

### TECHNICAL FIELD

The present disclosure relates to an advertisement delivery system and an advertisement delivery method.

### BACKGROUND ART

For example, operators of stores and other commercial facilities desire to distribute advertisements efficiently to induce customers to the stores operated by the operators. Various users using vehicles to move for shopping or the like are likely to need information regarding commodities that the users need, commodities in which the users are interested, commodities at low prices, and the like. Accordingly, technologies for information delivery apparatuses associated with parking lots have been developed in the related art.

For example, a DSRC communication system in Patent Literature 1 obtains store information through only a DSRC communication network without a complicated procedure in a parking lot where the DSRC communication system is installed. Specifically, parking of a vehicle is detected, and parking information and a mail address of a portable terminal carried by a user of the vehicle are transmitted to a management center of a parking lot. A management center side receives the transmitted signal, starts a parking billing process, and delivers advertisement information such as advertisements of stores near the parking lot, an URL list of each store, and a simple map of each store to the portable terminal designated with the mail address.

Patent Literature 2 discloses an information delivery apparatus that efficiently delivers questionnaires or advertisements for customers shopping in a shopping mall or a shop area where a plurality of stores are in business. The information delivery apparatus accumulates transaction information of which transaction processing apparatuses notify. When an entry of a customer to a station is notified from an automatic ticket gate or an exit of a customer is notified from a parking lot gate apparatus, it is determined that a customer finished their shopping in the shopping mall. Questionnaires, advertisements, or the like are delivered as delivery information to the customer.

Patent Literature 3 discloses an information reception terminal that reduces a burden of a customer or the like for managing a parking voucher in a commercial facility or the like where an information delivery system is used as much as possible. Specifically, the information delivery system includes an information storage unit that wirelessly receives and stores delivery information such as advertisement information, a display unit that displays the delivery information stored in the information storage unit, and a time information storage unit that receives and stores time information used as a beginning time of a parking time in a parking lot.

### CITATION LIST

### PATENT LITERATURE

Patent Literature 1: JP2005-228173A
Patent Literature 2: JP2008-134759A
Patent Literature 3: JP2010-218242A

### SUMMARY OF INVENTION

### TECHNICAL PROBLEM

However, since the systems disclosed in Patent Literatures 1 to 3 are assumed to use dedicated facilities or the like provided in parking lots or the like, cost spent to deliver advertisements by advertisers using the systems becomes expensive. Therefore, small stores operated by individuals or the like cannot use advertisement delivery systems lightly. Since advertisement delivery targets are limited to only places related to a specific parking lot, advertisements could not be delivered efficiently to many customers.

For example, in small-sized stores such as convenience stores or coffee shops selling food, unexpected situations in which bread, everyday dishes, or the like which are remainders on that day are desired to be sold out cheaply before expiration dates often occur. However, the unexpectedly occurring situations could not be reported efficiently with real-time advertisements to many users who can be customers.

For example, in stores such as relatively large supermarkets or shopping centers, broadcast in the store can be used to efficiently deliver advertisements in real time to many customers in the store. However, it may be diffident to deliver the advertisements to users outside the stores or distant users.

The present disclosure relates to an advertisement delivery system and an advertisement delivery method in which an advertiser can deliver an advertisement at low cost and it is useful to efficiently attract users receiving the advertisement as customers.

### SOLUTION TO PROBLEM

According to aspects of the present disclosure, an advertisement delivery system and an advertisement delivery method are configured as follows.

An advertisement delivery system includes a server managing communication between a user terminal of a registered user registered in advance and an advertiser terminal operable by an advertiser of an advertisement provided to the user terminal. The advertisement delivery system includes: a user management unit configured to manage the registered user using a parking lot registered in advance; an advertiser management unit configured to be able to provide a predetermined advertisement generation tool to the advertiser registering the parking lot as an advertisement delivery destination; and an advertisement delivery unit configured to deliver information regarding an advertisement generated by the advertisement generation tool by the advertiser to the registered user associated with the parking lot which is the advertisement delivery destination.

In an advertisement delivery method by a server managing communication between a user terminal of a registered user registered in advance and an advertiser terminal operable by an advertiser of an advertisement provided to the user terminal, the server manages the registered user using a parking lot registered in advance. The server provides a predetermined advertisement generation tool to the advertiser registering the parking lot as an advertisement delivery destination. The server delivers information regarding an advertisement generated by the advertisement generation tool by the advertiser to the registered user associated with the parking lot which is the advertisement delivery destination. The server reflects a use situation of the advertisement generation tool and bills each advertiser.

### ADVANTAGEOUS EFFECTS OF INVENTION

According to the advertisement delivery system and the advertisement delivery method of the present disclosure, an advertiser can deliver an advertisement at low cost and efficiently attract users receiving the advertisement as customers. Each registered user can receive an advertisement which is usable and valuable in a store or the like near a frequently used parking lot.

### BRIEF DESCRIPTION OF DRAWINGS

Fig. 1 is a schematic diagram illustrating a use environment of an advertisement delivery system according to an embodiment.
Fig. 2 is a block diagram illustrating a configuration of main units of the advertisement delivery system illustrated in Fig. 1.
Fig. 3 is a schematic diagram illustrating a use example of the advertisement delivery system illustrated in Fig. 2.
Fig. 4 is a flowchart illustrating an advertisement generation order-1 in which an advertisement generation tool is used.
Fig. 5 is a flowchart illustrating an advertisement generation order-2 in which the advertisement generation tool is used.
Fig. 6 is a flowchart illustrating an advertisement generation order-3 in which the advertisement generation tool is used.
Fig. 7 is a sequence diagram illustrating an overview of an advertisement registration procedure of an advertiser side.
Fig. 8 is a flowchart illustrating a detail automatic checking order.
Fig. 9 is a flowchart illustrating an image automatic checking order.
Fig. 10 is a flowchart illustrating a billing management order.

### DESCRIPTION OF EMBODIMENTS

A specific embodiment of the present invention will be described below with reference to the drawings.

### <Use Environment of Advertisement Delivery System>

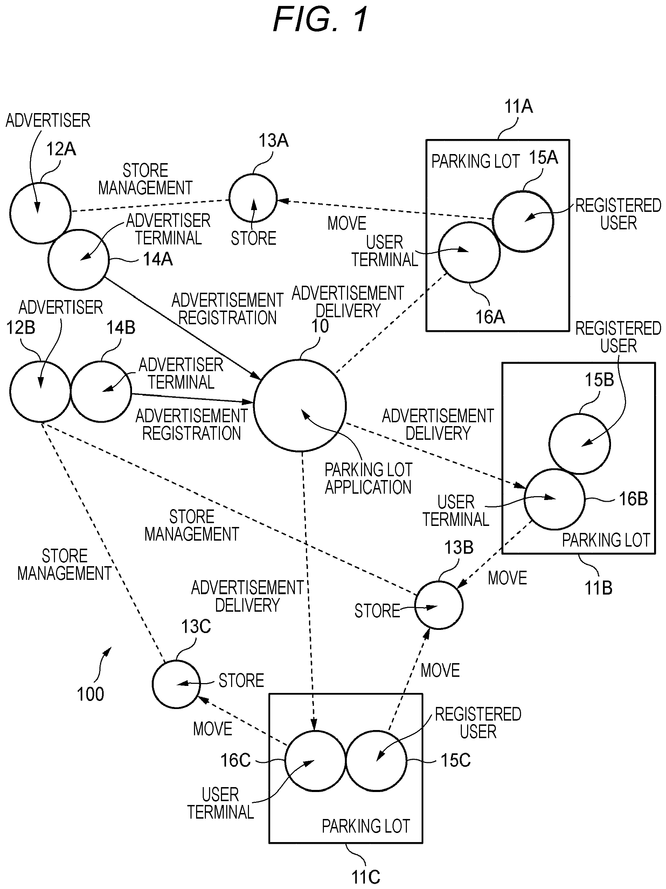

Fig. 1 is a schematic diagram illustrating a use environment of an advertisement delivery system 100 according to an embodiment of the present disclosure.

A parking lot application 10 has a function of allowing various users to conveniently use temporarily usable parking lots 11A, 11B, 11C, and the like such as coin parking lots located at each place as necessary as a basic function. For example, the parking lot application 10 provides a function of allowing situations of parking reservation, entry, exit, fee payment, vacancy, and the like to be conveniently checked. Accordingly, users who are likely to use parking lots at each place download and install the parking lot application 10 in own user terminals to use the parking lot application 10 and then perform use registration for using the parking lot application 10. Accordingly, the users who performed the use registration are, for example, registered users 15A, 15B, and 15C illustrated in Fig. 1.

The parking lot application 10 according to the embodiment has a function of delivering an advertisement in addition to the foregoing basic function. Delivery destinations of the advertisement are the registered users 15A, 15B, and 15C using the parking lots 11A, 11B, and 11C. Each of the registered users 15A, 15B, and 15C can receive an advertisement delivery service from the parking lot application 10 using own user terminals 16A, 16B, and 16C. For example, smartphone can be used as the user terminals 16A to 16C. In the following description, a case where the advertisement is delivered to the registered users 15A, 15B, and 15C who are using the parking lots 11A, 11B, and 11C at each place will be described as an example. However, even when the registered users 15A, 15B, and 15C are making reservation for the parking lots 11A, 11B, and 11C at each place or when the parking lots 11A, 11B, and 11C at each place are registered as parking lots registered as use members or favorite parking lots, the advertisement may be delivered to the registered users 15A, 15B, and 15C.

On the other hand, relatively small-sized stores 13A, 13B, and 13C such as convenience stores or coffee shops are located at each place. Owners or the like managing the stores 13A, 13B, and 13C can use the parking lot application 10 as advertisers 12A and 12B.

For example, when an owner of the store 13A illustrated in Fig. 1, that is, the advertiser 12A, desires to put an advertisement of a commodity sold in the store 13A, the advertiser 12A can use a service of the parking lot application 10 using a PC, a smartphone, or the like owned by the advertiser 12A as the advertiser terminal 14A. The advertiser 12A generates a desired advertisement using the parking lot application 10 and registers the generated advertisement in the parking lot application 10.

The parking lot application 10 can deliver the advertisements registered by the advertisers 12A and 12B to the registered users 15A, 15B, and 15C according to predetermined conditions. For example, when the advertisement of the store 13A is registered in the parking lot application 10 and there is the registered user 15A using the parking lot 11A located at a distance relatively close to the store 13A, the corresponding advertisement is automatically delivered to the user terminal 16A.

Here, because the store 13A of the delivered advertisement is located nearby the registered user 15A, the registered user 15A is highly likely to move from the parking lot 11A and visit the store 13A when the registered user 15A is interested in details of the advertisement. Therefore, the advertiser 12A can efficiently obtain a benefit from the advertisement delivery.

### <Configuration of Advertisement Delivery System>

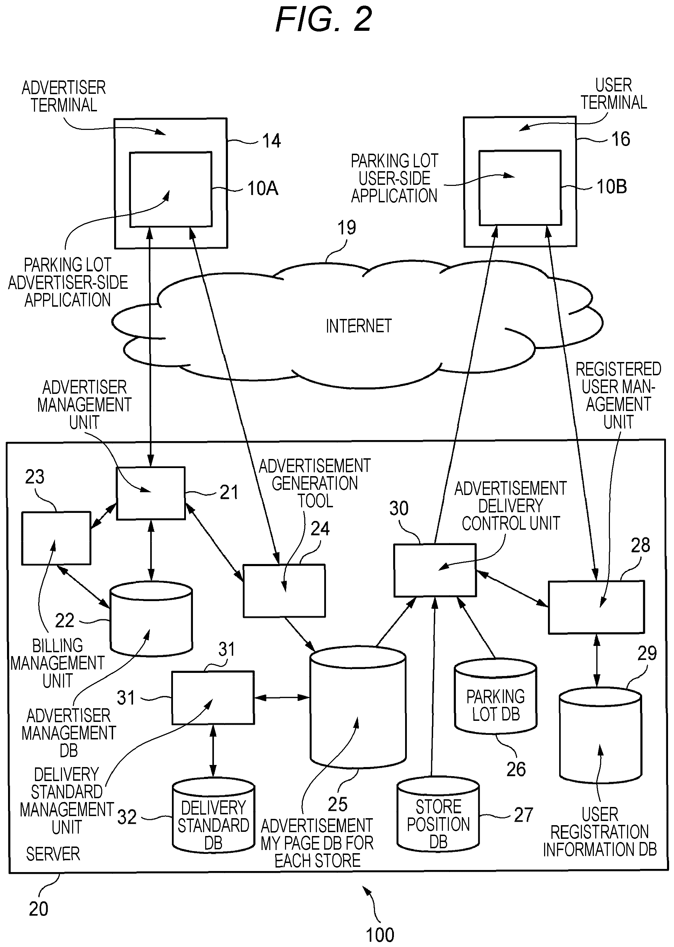

Fig. 2 is a block diagram illustrating a configuration of main units of the advertisement delivery system 100 illustrated in Fig. 1.

In the advertisement delivery system 100 in Fig. 2, functions of the parking lot application 10 in Fig. 1 can be configured by an advertiser-side application 10A installed in the advertiser terminal 14, a user-side application 10B installed in the user terminal 16, and various functions embedded on the server 20. Main units of the advertiser-side application 10A and the user-side application 10B are also disposed on the server 20 side to configure the parking lot application 10 as a cloud.

The server 20 can be installed at a predetermined data center. Accordingly, the advertiser terminal 14 and the user terminal 16 can each communicate with the server 20 via an Internet 19 to use the functions of the parking lot application 10.

The server 20 illustrated in Fig. 2 includes an advertiser management unit 21, an advertiser management database (DB) 22, a billing management unit 23, an advertisement generation tool 24, an advertisement my page DB 25, a parking lot DB 26, a store position DB 27, a registered user management unit 28, a user registration information DB 29, an advertisement delivery control unit 30, a delivery standard management unit 31, and a delivery standard DB 32.

The advertiser management unit 21 authenticates each advertiser using a password or the like or performs ascertainment of a service use situation, ascertainment of a fee payment situation, management regarding whether the advertisement generation tool is available, and the like for each advertiser.

The advertiser management DB 22 retains information such as authentication information, a service use history, billing information, and a payment history for each advertiser.

The billing management unit 23 generates billing information based on a use record of the service for each advertiser. The generated billing information is stored in the advertiser management DB 22 in association with the advertiser.

The advertisement generation tool 24 allocates a storage area necessary to register advertisement information as my page for each advertiser and each store or performs various processes to support work necessary to generate or register an advertisement.

The advertisement my page DB 25 retains information regarding my page reserved as an independent storage area of an advertisement for each store of each advertiser and manages each my page in association with the advertiser and the store.

The parking lot DB 26 retains and manages positional information such as latitude/longitude indicating a position at which each of many parking lots which are management targets is located.

The store position DB 27 retains and manages positional information such as latitude/longitude indicating a position at which each of many stores which are management targets is located.

The registered user management unit 28 performs control such that information such as latitude/longitude indicating an advertisement delivery destination of the user terminal 16 carried by each registered user or a present position of the user terminal 16 is acquired in association with each registered user.

The user registration information DB 29 retains information indicating an individual attribute such as an age group, sex, or preference of each registered user. The attribute information is information transmitted when each user is registered.

The advertisement delivery control unit 30 performs a process of automatically transmitting advertisement information of a corresponding my page to the user-side application 10B on each user terminal 16 that is delivery destination when a delivery condition determined by the advertiser or the like for each advertisement registered in the advertisement my page DB 25 is matched.

For example, when content of details inappropriate to deliver to each registered user or content of illegal or criminal details is generated by the advertiser, the delivery standard management unit 31 automatically performs management to prevent registration of the content in the advertisement my page DB 25 as it is, using information of the delivery standard DB 32.

The delivery standard DB 32 retains preregistered information which can be used as a standard for determining whether the content of the generated advertisement is content inappropriate in delivery. The specific details of the delivery standard DB 32 will be described below.

### <Use Example of Advertisement Delivery System>

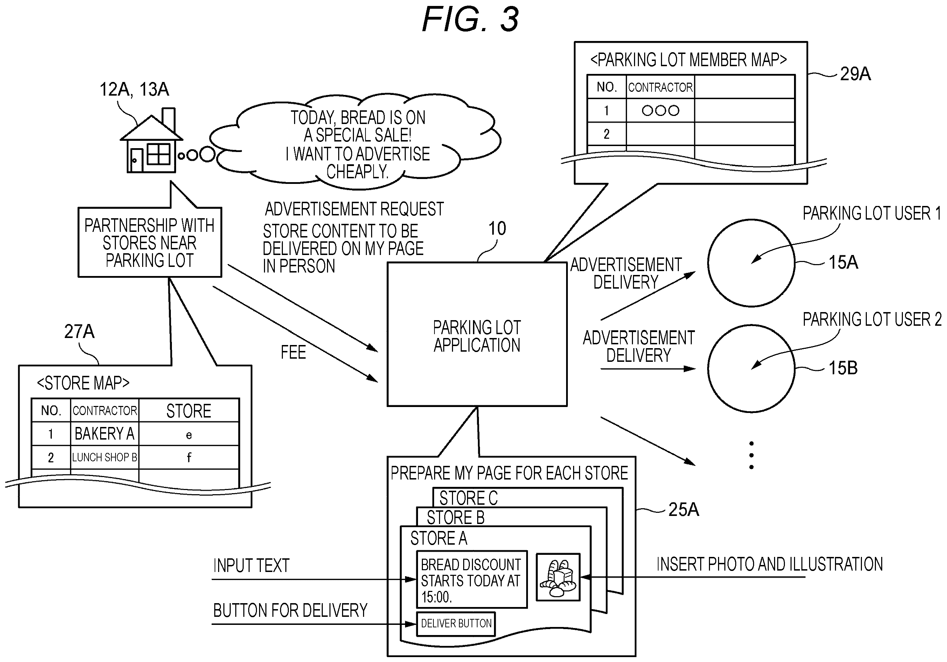

Fig. 3 is a schematic diagram illustrating a use example of the advertisement delivery system 100 illustrated in Fig. 2.

Since the advertisement delivery system 100 manages many parking lots, the advertiser 12A who is an owner of the store 13A can establish a partnership with parking lots near the store 13A by using the parking lot application 10. For example, the store 13A can be registered in a store map on a store position DB 27A as in Fig. 3.

For example, when there are many breads which are remainders on that day in the store 13A in Fig. 3, the advertiser 12A wants to put an advertisement such as "Today, bread is on a special sale!". Discounted bread can be sold out quickly because of the advertisement. The number of customers after that day can be increased because of the advertisement.

In the foregoing situation, it is important to efficiently deliver the advertisement at considerably low cost and also in real time to customers who are highly likely to buy the bread.

Accordingly, for example, when there is the parking lot 11A in a place close to the store 13A, as illustrated in Fig. 1, it is efficient to deliver the advertisement to registered users of members using the parking lot 11A using a parking lot member map of the user registration information DB 29A as in Fig. 3.

The advertiser 12A can prepare a my page for each store on the advertisement my page DB 25A by using the parking lot application 10. In each my page, as the advertisement as in Fig. 3, the advertiser can fill out content such as text, photo, and illustration in person. Accordingly, for example, a sentence "Bread discount starts at today 15:00", a bread photo, and the like can be registered as an advertisement.

When the advertiser operates a "deliver button", the parking lot application 10 automatically delivers the advertisement of each registered my page. Delivery destinations of the advertisement can be the registered users 15A and 15B registered as members in the parking lot 11A or the like close to the corresponding store 13A or the registered users 15A and 15B who are the members actually located in the parking lot 11A. For example, when each registered user starts the parking lot application 10 in the parking lot 11A and the user terminal is controlled such that information regarding a current position is transmitted to the server, the actual user position can be associated with the parking lot.

When the advertisement is delivered as in Fig. 3, a special facility may not be prepared except for the server 20 implementing the function of the parking lot application 10. Accordingly, the advertiser 12A of the store 13A can request the parking lot application 10 to deliver the advertisement at a considerably low fee.

### <Advertisement Generation Order>

### <Example 1>

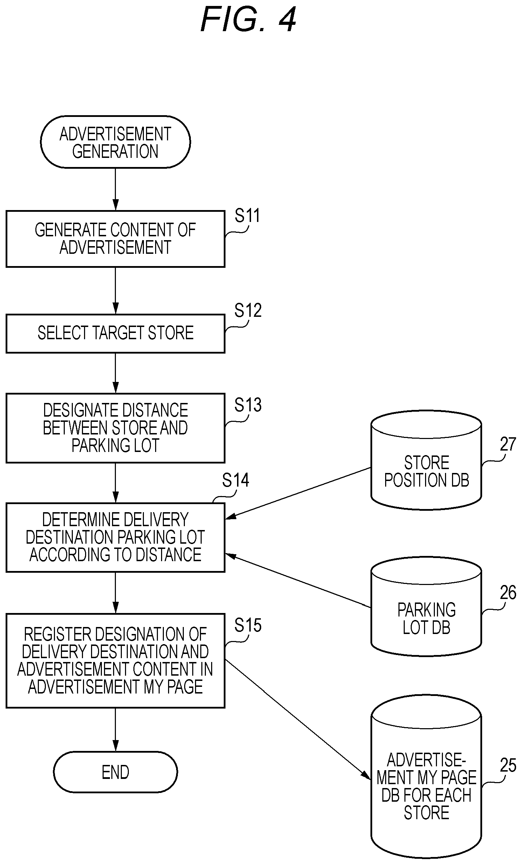

Fig. 4 is a flowchart illustrating an advertisement generation order-1 in which an advertisement generation tool is used.

For example, in a situation illustrated in Fig. 2, an advertiser operating the advertiser terminal 14 can use a function of the advertisement generation tool 24 by communicating with the server 20 using the advertiser-side application 10A. An advertisement is generated in an order illustrated in Fig. 4. The order of Fig. 4 will be described below.

In S11, the advertiser generates content of a necessary advertisement using the advertisement generation tool 24 from the advertiser-side application 10A. For example, content including a sentence of text such as "Bread Discount starts today!" and a photo or an illustration of bread is generated.

In S12, the advertiser can select a target store of the generated advertisement. In S13, the advertiser can designate a distance between the advertisement target store and the parking lot.

In S14, the advertisement generation tool 24 determines a parking lot to be the advertisement delivery destination satisfying a distance condition using the parking lot DB 26 and the store position DB 27 based on the store selected in S12 and the distance designated in S13.

In S15, the advertisement generation tool 24 registers the designation of the advertisement delivery destination determined in S14 and the content of the advertisement generated in S11 in an area of a corresponding my page on the advertisement my page DB 25.

### <Example 2>

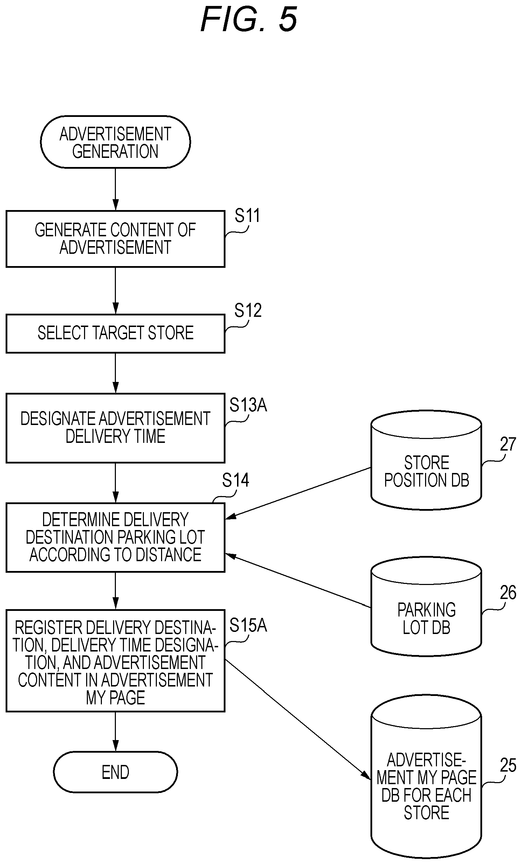

Fig. 5 is a flowchart illustrating an advertisement generation order-2 in which the advertisement generation tool 24 is used. The order of Fig. 5 will be described below.

In S11, the advertiser generates content of a necessary advertisement using the advertisement generation tool 24 from the advertiser-side application 10A. For example, content including a sentence of text such as "Bread discount starts today!" and a photo or an illustration of bread is generated.

In S12, the advertiser can select a target store of the generated advertisement. In S13, the advertiser can designate a distance between the advertisement target store and the parking lot.

In S13A, the advertiser can designate an advertisement delivery time. For example, there is no meaning in delivering advertisement after an advertisement target commodity is sold out or in a period of time in which the corresponding store is closed. Therefore, the advertiser designates a delivery time so that the advertisement is delivered only in a specific period of time in which a value of the advertisement is high.

In S14, the advertisement generation tool 24 determines a parking lot to be the advertisement delivery destination satisfying a distance condition using the parking lot DB 26 and the store position DB 27 based on the store selected in S12 and the distance designated in S13.

In S15A, the advertisement generation tool 24 registers the designation of the advertisement delivery destination determined in S14, the designation of the advertisement delivery time, and the content of the advertisement generated in S11 in an area of the corresponding my page on the advertisement my page DB 25.

### <Example 3>

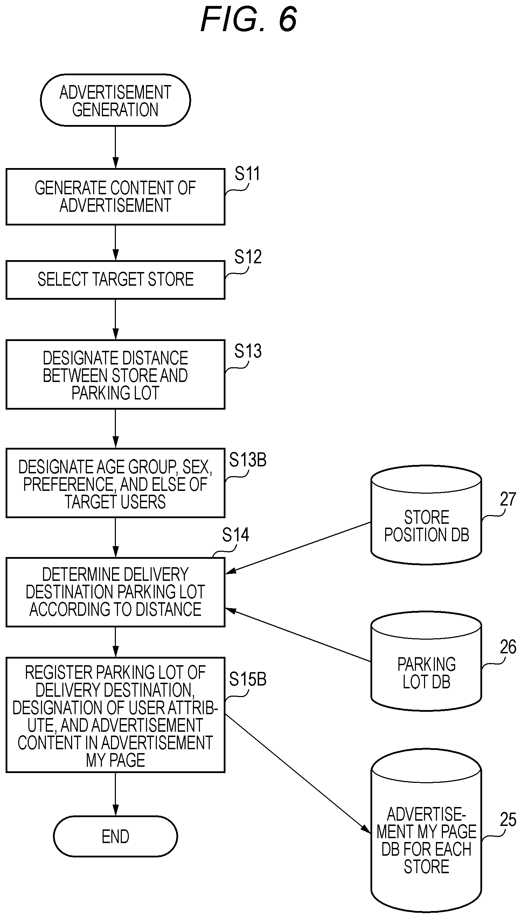

Fig. 6 is a flowchart illustrating an advertisement generation order-3 in which the advertisement generation tool 24 is used. The order of Fig. 6 will be described below.

In S11, the advertiser generates content of a necessary advertisement using the advertisement generation tool 24 from the advertiser-side application 10A. For example, content including a sentence of text such as "Bread discount starts today!" and a photo or an illustration of bread is generated.

In S 12, the advertiser can select a target store of the generated advertisement. In S13, the advertiser can designate a distance between the advertisement target store and the parking lot.

In S 13B, an attribute of a target user to be a delivery destination of the advertisement can be designated. That is, when the advertiser restricts an age group, sex, preference, and the like of target users considering relevance between features of advertisement target commodities and attributes of customers who are highly likely to buy the commodities, the advertisement can be delivered to users for which an advertisement effect is high.

In S14, the advertisement generation tool 24 determines a parking lot to be the advertisement delivery destination satisfying a distance condition using the parking lot DB 26 and the store position DB 27 based on the store selected in S12 and the distance designated in S13.

In S15B, the advertisement generation tool 24 registers the designation of the advertisement delivery destination determined in S14, the attributes of the target users designated in S13B, and the content of the advertisement generated in S11, in an area of the corresponding my page on the advertisement my page DB 25.

As in the order illustrated in Fig. 5, the designation of the advertisement delivery time may be further added to the order of Fig. 6.

### <Overview of Advertisement Registration Procedure>

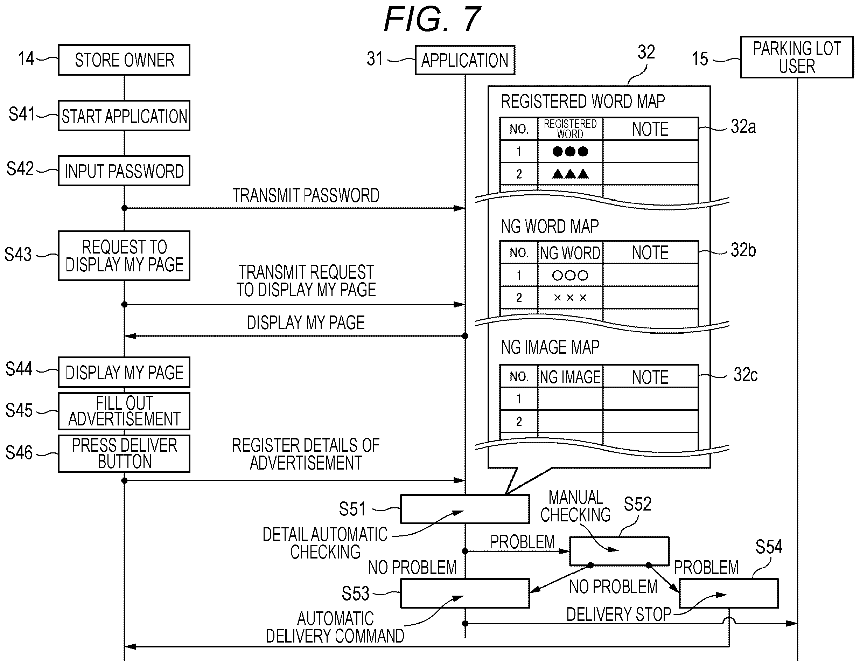

Fig. 7 is a sequence diagram illustrating an overview of an advertisement registration procedure of an advertiser side. That is, each advertiser can perform an advertisement registration procedure in the order illustrated in Fig. 7 by operating the advertiser-side application 10A with the advertiser terminal 14.

As illustrated in Fig. 7, the advertiser starts the advertiser-side application 10A in S41 and inputs their password in S42 so that the advertiser can use the advertisement delivery system 100 as a specific advertiser.

The advertiser management unit 21 included in the parking lot application 10 of the server 20 side authenticates the advertiser with the password transmitted from the advertiser terminal 14 and identifies the advertiser.

The advertiser operating the advertiser terminal 14 requests the advertiser management unit 21 to display an own my page in S43 by operating the advertiser-side application 10A. When the same advertiser registers a plurality of stores in advance in the parking lot application 10, display target stores are designated.

The advertiser management unit 21 on the server 20 reads details of the corresponding my page from the advertisement my page DB 25 and transmits information necessary for screen display to the advertiser terminal 14. When the information is received, the advertiser-side application 10A on the advertiser terminal 14 displays the details of my page in S44.

The advertiser operating the advertiser terminal 14 generates their advertisement in the orders illustrated in Figs. 4 to 6 and fills out the advertisement on an own my page (S45).

When the advertiser operating the advertiser terminal 14 presses a "deliver button" on a screen of the advertiser-side application 10A in S46, details of the generated advertisement and a registration request is transmitted to the advertiser management unit 21 of the server 20 side.

The advertiser management unit 21 delivers the registration request and the details of the advertisement transmitted from the advertiser terminal 14 to the delivery standard management unit 31. The delivery standard management unit 31 automatically checks the details of the advertisement transmitted from the advertiser terminal 14 in S51. That is, before the details of the advertisement are registered, it is automatically checked whether there is a problem in the details as the advertisement. The automatic checking is performed based on the details of the delivery standard DB 32.

The delivery standard DB 32 illustrated in Fig. 7 includes a registered word map 32a, an NG word map 32b, and an NG image map 32c.

When a problem is detected in the detail automatic checking of S51, the delivery standard management unit 31 outputs the corresponding advertisement details as a checking target of S52. In manual checking of S52, a person checks advertisement details of the checking target output by the delivery standard management unit 31 and determines whether there is a problem.

For an advertisement considered to have no problem in the details in S51 or S52, the advertiser management unit 21 outputs an automatic delivery command in S53. That is, the corresponding advertisement is registered in the advertisement my page DB 25 as an automatic delivery target. Accordingly, the advertisement delivery control unit 30 controls the advertisement such that the advertisement is automatically delivered to a registered user 15 using a parking lot located near the corresponding store.

Conversely, for an advertisement considered to have a problem in the manual checking of S52, the delivery standard management unit 31 processes the delivery as prohibition in S54, and the advertiser management unit 21 notifies the result to the advertiser terminal 14. The advertisement prohibited from being delivered is not registered in the advertisement my page DB 25.

### <Detail Automatic Checking Order>

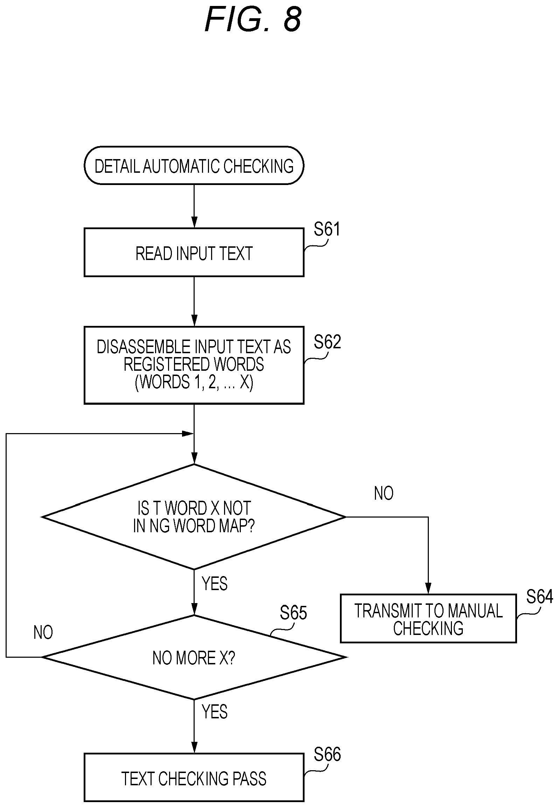

Fig. 8 is a flowchart illustrating a detail automatic checking order. The order of Fig. 8 will be described below.

The delivery standard management unit 31 reads text data from content of a checking target advertisement in S61. Then, the read text data is disassembled into registered words based on the details of the registered word map 32a (S62).

The delivery standard management unit 31 compares each of the words disassembled in S62 with each NG word registered on the NG word map 32b (S63). When one or more words matching the NG words are detected, the process moves from S63 to S64 and the corresponding advertisement content is processed as a manual checking target.

When word matching the NG word is not detected in the entire text, the process moves from S63 to S65 and S66 and the delivery standard management unit 31 determines the corresponding advertisement content as text checking pass.

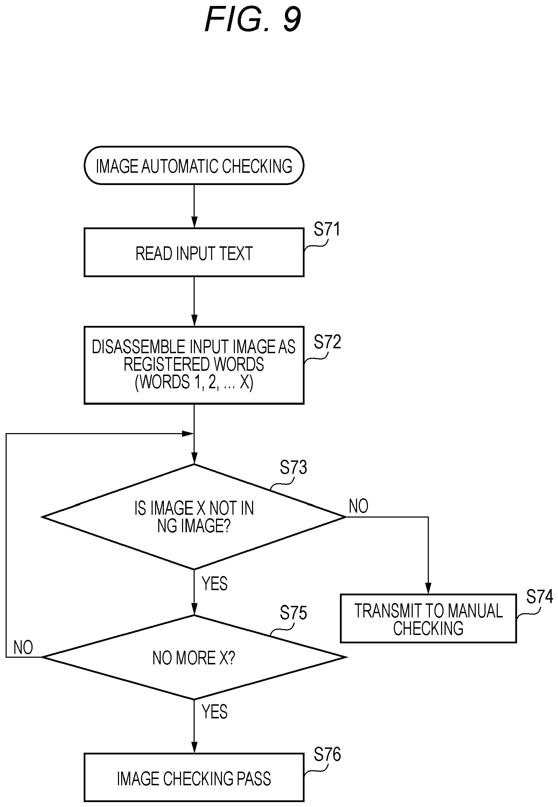

Thereafter, "image automatic checking" in Fig. 9 is performed.

### <Image Automatic Checking Order>

Fig. 9 is a flowchart illustrating an image automatic checking order. The order of Fig. 9 will be described below.

The delivery standard management unit 31 reads the image data in the content of the checking target advertisement in S71. In S72, a number is assigned to the read image data. When there are a plurality of pieces of image data, different numbers are assigned to each image.

The delivery standard management unit 31 processes the images numbered in S72 sequentially in S73 and compares a feature of each image with a feature of each NG image registered on the NG image map 32c. When one or more images with features considerably close to the NG images are detected, the process moves from S73 to S74 to process corresponding advertisement content as a manual checking target.

When image with the features close to the NG images is not detected among all the images included in a target advertisement, the process moves from S73 to S75 and S76 and the delivery standard management unit 31 determines the corresponding advertisement content is determined as image checking pass.

For an advertisement determined as text checking pass in S66 and determined as image checking pass in S76, the delivery standard management unit 31 considers that there is no problem. The advertisement is registered as a delivery target in the advertisement my page DB 25 through the process of S53 of Fig. 7.

### <Billing Management Order>

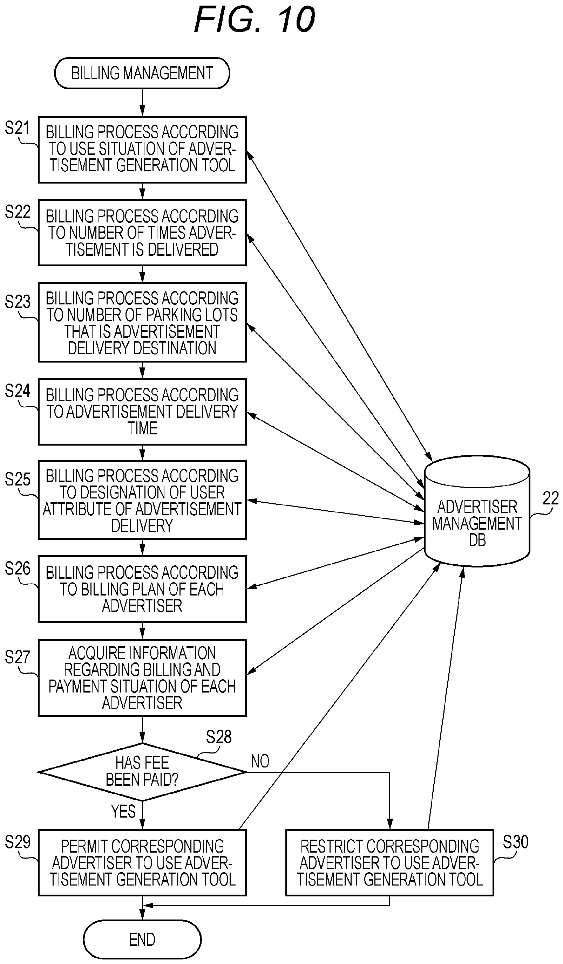

Fig. 10 is a flowchart illustrating a billing management order.

The advertisement delivery system 100 illustrated in Fig. 1 collects a fee as a service use price from an advertiser using the parking lot application 10 to cover an expense or the like necessary to operate the server 20 or the like that performs a function of the parking lot application 10. Therefore, the billing management unit 23 perform the billing process illustrated in Fig. 10, and calculates and charges an appropriate fee for each advertiser.

Each advertiser can select a billing plan in advance so that appropriate billing is applied to their use environment. The billing process of Fig. 10 will be described below.

The billing management unit 23 extracts history data indicating a use situation of the advertisement generation tool 24 for each advertiser from the advertiser management DB 22 and performs billing calculation according to the number of tool uses or a time, for example, on a daily basis or a monthly basis in S21.

The billing management unit 23 acquires the number of times the advertisement is delivered for each advertiser from history data of the advertisement my page DB 25 or the advertiser management DB 22 and performs billing calculation according to the number of delivers, for example, on a daily basis or a monthly basis in S22.

The billing management unit 23 acquires history data indicating the number of parking lots designated as advertisement delivery destinations by each advertiser from the advertisement my page DB 25 or the advertiser management DB 22 and performs billing calculation according to the number of parking lots of the delivery destinations designated, for example, on a daily basis or a monthly basis in S23. The billing management unit 23 may reflect the number of vehicles which can be parked in each parking lot designated as an advertisement delivery destination by the advertiser in the billing.

The billing management unit 23 acquires history data indicating a length or the like of a delivery time of the advertisement designated by each advertiser from the advertisement my page DB 25 or the advertiser management DB 22 and performs billing calculation according to a delivery time designated, for example, on a daily basis or a monthly basis in S24.

The billing management unit 23 acquires history data indicating a designation situation of user attributes of an advertisement delivery condition designated by each advertiser from the advertisement my page DB 25 or the advertiser management DB 22 and performs billing calculation according to designation division of the user attributes designated, for example, on a daily basis or a monthly basis in S25.

The billing management unit 23 performs a final billing process in S26 by a calculation expression of a billing plan selected and registered in advance by a corresponding advertiser based on details of billing items calculated in each of S21 to S25 for each advertiser.

The billing management unit 23 acquires information indicating the billing and an actual payment situation for each advertiser from the advertiser management DB 22 in S27 and identifies whether the fee has been paid in S28.

The advertiser management unit 21 permits an advertiser who has paid the fee to use the advertisement generation tool 24 (S29). The advertiser management unit 21 restricts the advertiser who has not paid the fee to use the advertisement generation tool 24 and notifies the advertiser terminal 14 of the corresponding advertiser that there is an unpaid fee (S30).

As described above, the advertisement delivery system 100 according to the embodiment can deliver the advertisement at considerably cheap cost since a special facility except for the server 20 is not used for implementation. Accordingly, each advertiser managing a small-sized store or the like can update and deliver their desired advertisement at low cost and substantially in real time.

Since each advertiser can designate only registered users of some parking lots located close to advertisement target stores, designate a delivery time of the advertisement, or designate attributes of a user to be a delivery target, the advertisement can be efficiently at a lower fee.

The delivery standard management unit 31 of the advertisement delivery system 100 automatically checks whether information regarding the advertisement generated by the advertiser satisfies a predetermined condition, and then registers each advertisement as a delivery target to the advertisement my page DB 25. Therefore, it is possible to improve quality or reliability of the advertisement delivered to each registered user.

Since the billing management unit 23 bills each advertiser at an appropriate fee, it is easy to continuously operate a service of the advertisement delivery system 100 by a fee paid by each advertiser. Since the advertiser management unit 21 permits the advertiser for whom situations of the billing and the payment satisfy a predetermined condition to use the advertisement generation tool 24, it is easy to collect a billed fee from the advertiser.

Here, the advertisement delivery system and a report delivery method according to the present disclosure will be described together briefly in the following [1] to [9].
[1] An advertisement delivery system (100) that includes a server (20) managing communication between a user terminal (16) of a registered user registered in advance and an advertiser terminal (14) operable by an advertiser of an advertisement provided to the user terminal, the advertisement delivery system including:
   a user management unit (the registered user management unit 28) configured to manage a registered user using a parking lot registered in advance;
   an advertiser management unit (21) configured to be able to provide a predetermined advertisement generation tool (24) to the advertiser registering the parking lot as an advertisement delivery destination; and
   an advertisement delivery unit (advertisement delivery control unit 30) configured to deliver information regarding an advertisement generated by the advertisement generation tool by the advertiser to the registered user associated with the parking lot which is the advertisement delivery destination.
   According to the advertisement delivery system with the configuration of [1], it is possible to implement delivery of the advertisement through the communication between the user terminal, the advertiser terminal, and the server. Accordingly, since the advertisement delivery system can be implemented without providing a specifical dedicated facility except for the server, it is possible to significantly reduce cost for advertisement delivery. Since the advertisement delivery system delivers the advertisement to only registered users using parking lots registered in advance, it is possible to efficiently deliver the advertisement to users who are highly likely to be customers of the advertiser by utilizing the delivered advertisement. Since the advertiser can generate details of the delivered advertisement with the advertisement generation tool in person, it is also possible to generate a desired advertisement in substantial real time as necessary and deliver the advertisement immediately.
[2] The advertisement delivery system according to [1], further including:
   a positional information retention unit (parking lot DB 26 or store position DB 27) configured to retain and manage positional information of each parking lot registered in advance and positional information of each store registered by the advertiser, in which
   the advertisement generation tool includes a delivery destination selection unit (S12 to S14) that restricts parking lots registered as delivery destinations of a generated advertisement to parking lots within a predetermined distance from a registered store of the advertiser and displays the restricted parking lots.
   According to the advertisement delivery system with the configuration of [2], it is possible to deliver the advertisement to only the registered users using the parking lots located at positions relatively close to stores where the delivered advertisement can be used. Accordingly, for example, when each registered user starts a predetermined parking lot application with their user terminal, it is possible to receive the advertisement of the stores located near parking lots which are reserved to be used or are registered. When the advertiser restricts a range of users who are delivery destinations, the advertisement can be efficiently delivered to users who are highly likely to utilize the advertisement while reducing delivery cost of the advertisement.
[3] The advertisement delivery system according to [1] or [2], further including a delivery standard management unit (31) configured to compare details of content such as text included in each piece of advertisement information with predetermined delivery standard information (delivery standard DB 32) before registering the advertisement information generated by the advertisement generation tool, determine pass or failure of the details, and register deliverable advertisement information when determined as pass (S51 and S53).
   According to the advertisement delivery system with the configuration of [3], it is possible to prevent, for example, a sentence with an expression inappropriate in a public place, an illegal or criminal sentence, image, or the like from being delivered to the users. Accordingly, it is possible to restrict the advertiser from delivering an inappropriate advertisement intentionally or unintentionally and improve reliability of the delivered advertisement.
[4] The advertisement delivery system according to any one of [1] to [3], in which the advertiser management unit includes a billing processing unit (billing management unit 23) that reflects a use situation of the advertisement generation tool and bills each advertiser (S21).
   According to the advertisement delivery system with the configuration of [4], it is possible to bill the advertiser according to the number of times the advertisement is actually generated or the number of times the advertisement is delivered. Accordingly, when a use frequency is low, the service can be used at low fee. Therefore, it is possible to implement an advertisement service which is easy to use, for example, even when sales are relatively small as in a store operated by an individual.
[5] The advertisement delivery system according to [4], further including:
   a delivery destination selection unit (S12 to S14) configured such that each advertiser is able to select a delivery destination of advertisement information generated by the corresponding advertiser from the plurality of parking lots, in which
   the billing processing unit performs billing according to the number of parking lots selected as advertisement delivery destinations by the corresponding advertiser (S23).
   According to the advertisement delivery system with the configuration of [5], the advertiser can extend or narrow a range of the parking lots which are advertisement destinations. Accordingly, the advertiser can adjust cost of the advertisement delivery and the number of desired delivery destinations according to a situation.
[6] The advertisement delivery system according to [4] or [5], in which the advertiser management unit permits each advertiser to use the advertisement generation tool when a billing situation of the billing processing unit and a payment situation of the corresponding advertiser satisfy a predetermined condition (S27 to S30).
   According to the advertisement delivery system with the configuration of [6], the service can be continuously provided to only advertisers actually paying a price of the advertisement delivery system. Accordingly, a service provider providing the advertisement delivery system can reliably collect cost necessary to operate the system from the advertisers actually using the service.
[7] The advertisement delivery system according to any one of [4] to [6], further including:
   a delivery time selection unit (S13A) configured such that each advertiser is able to select a delivery time of advertisement information generated by the advertiser, in which
   the billing processing unit performs billing according to a length or a period of time of the delivery time of the advertisement selected by the corresponding advertiser (S24).
   According to the advertisement delivery system with the configuration of [7], the advertiser can restrict or adjust a time of the advertisement delivery as necessary. Accordingly, it is possible to efficiently deliver the advertisement only in a specific period of time in which the advertisement delivery is actually necessary or a specific time in which a significant effect of the advertisement can be expected.
[8] The advertisement delivery system according to any one of [1] to [7], in which
   the user management unit includes an attribute information storage unit (user registration information DB 29) that manages attribute information indicating an attribute unique to each user,
   the advertisement generation tool includes a user attribute selection unit (S13B) that selects attributes of a user to be a delivery destination of the generated advertisement, and
   the advertisement delivery unit delivers information regarding the advertisement generated by the advertisement generation tool to the registered user satisfying a condition of the selected user attributes and bills the corresponding advertiser according to the selected user attribute (S25).
   According to the advertisement delivery system with the configuration of [8], it is possible to select users to be advertisement delivery targets as advertisement delivery targets considering, for example, an age group, sex, preference, and the like. Therefore, it is possible to efficiently deliver the advertisement to only some of the users for whom the effect of the advertisement delivery can be expected.
[9] An advertisement delivery method by a server (20) managing communication between a user terminal (16) of a registered user registered in advance and an advertiser terminal (14) operable by an advertiser of an advertisement provided to the user terminal, in which
   the server (20) manages a registered user using a parking lot registered in advance,
   the server (20) provides a predetermined advertisement generation tool (24) to the advertiser registering the parking lot as an advertisement delivery destination; and
   the server (20) delivers information regarding an advertisement generated by the advertisement generation tool (24) by the advertiser to the registered user associated with the parking lot which is the advertisement delivery destination, and
   the server (20) reflects a use situation of the advertisement generation tool (24) and bills each advertiser (S21).

According to the advertisement delivery method with the configuration of [9], since the advertisement delivery method can be implemented without providing a specifical dedicated facility except for the server, it is possible to significantly reduce cost of advertisement delivery. Since the advertisement delivery method delivers the advertisement only to the registered users using the parking lots registered in advance, it is possible to efficiently deliver the advertisement to users who are highly likely to be customers of the advertiser by utilizing the delivered advertisement. Since the advertiser can generate details of the delivered advertisement with the advertisement generation tool in person, it is also possible to generate a desired advertisement substantially in real time as necessary and deliver the advertisement immediately. It is possible to implement billing on the advertiser according to the number of times the advertisement is actually generated or the number of times the advertisement is delivered. Accordingly, when a use frequency is low, the service can be used at low cost. Therefore, it is possible to implement an advertisement service which is easy to use, for example, even when sales are relatively small as in a store operated by an individual.

Various embodiments have been described above with reference to the drawings, but it is needless to say that the present disclosure is not limited to the examples. It should be apparent to those skilled in the art that various modifications or corrections can be made within the scope of the claims and the modifications and corrections naturally pertain to the technical scope of the present disclosure. The constituents in the foregoing embodiments may be combined arbitrarily within the scope of the present invention departing from the gist of the present invention in the foregoing embodiments.

Priority is claimed on Japanese Patent Application (No. 2021-055834), filed March 29, 2021, the content of which is incorporated herein by reference.

### REFERENCE SIGNS LIST

- 10: Parking lot application
- 10A: Advertiser-side application
- 10B: User-side application
- 11A, 11B, 11C: Parking lot
- 12A, 12B: Advertiser
- 13A, 13B, 13C: Store
- 14, 14A, 14B: Advertiser terminal
- 15A, 15B, 15C: Registered user
- 16, 16A, 16B, 16C: User terminal
- 19: Internet
- 20: Server
- 21: Advertiser management unit
- 22: Advertiser management DB
- 23: Billing management unit
- 24: Advertisement generation tool
- 25, 25A: Advertisement my page DB
- 26: Parking lot DB
- 27, 27A: Store position DB
- 28: Registered user management unit
- 29, 29A: user registration information DB
- 30: Advertisement delivery control unit
- 31: Delivery standard management unit
- 32: Delivery standard DB
- 32a: Registered word map
- 32b: NG word map
- 32c: NG image map
- 100: Advertisement delivery system

## Claims

1. An advertisement delivery system that includes a server managing communication between a user terminal of a registered user registered in advance and an advertiser terminal operable by an advertiser of an advertisement provided to the user terminal, the advertisement delivery system comprising:
a user management unit configured to manage a registered user using a parking lot registered in advance;
an advertiser management unit configured to be able to provide a predetermined advertisement generation tool to the advertiser registering the parking lot as an advertisement delivery destination; and
an advertisement delivery unit configured to deliver information regarding an advertisement generated by the advertisement generation tool by the advertiser to the registered user associated with the parking lot which is the advertisement delivery destination.

2. The advertisement delivery system according to claim 1, further comprising:
a positional information retention unit configured to retain and manage positional information of each parking lot registered in advance and positional information of each store registered by the advertiser, wherein
the advertisement generation tool includes a delivery destination selection unit that restricts parking lots registered as delivery destinations of a generated advertisement to parking lots within a predetermined distance from a registered store of the advertiser and displays the restricted parking lots.

3. The advertisement delivery system according to claim 1 or 2, further comprising
a delivery standard management unit configured to compare details of content such as text included in each piece of advertisement information with predetermined delivery standard information before registering the advertisement information generated by the advertisement generation tool, determine pass or failure of the details, and register deliverable advertisement information when determined as pass.

4. The advertisement delivery system according to any one of claims 1 to 3, wherein
the advertiser management unit includes a billing processing unit that reflects a use situation of the advertisement generation tool and bills each advertiser.

5. The advertisement delivery system according to claim 4, further comprising:
a delivery destination selection unit configured such that each advertiser is able to select a delivery destination of advertisement information generated by the corresponding advertiser from the plurality of parking lots, wherein
the billing processing unit performs billing according to the number of parking lots selected as advertisement delivery destinations by the corresponding advertiser.

6. The advertisement delivery system according to claim 4 or 5, wherein
the advertiser management unit permits each advertiser to use the advertisement generation tool when a billing situation of the billing processing unit and a payment situation of the corresponding advertiser satisfy a predetermined condition.

7. The advertisement delivery system according to any one of claims 4 to 6, further comprising:
a delivery time selection unit configured such that each advertiser is able to select a delivery time of advertisement information generated by the advertiser, wherein
the billing processing unit performs billing according to a length or a period of time of the delivery time of the advertisement selected by the corresponding advertiser.

8. The advertisement delivery system according to any one of claims 1 to 7, wherein:
the user management unit includes an attribute information storage unit that manages attribute information indicating an attribute unique to each user;
the advertisement generation tool includes a user attribute selection unit that selects attributes of a user to be a delivery destination of the generated advertisement; and
the advertisement delivery unit delivers information regarding the advertisement generated by the advertisement generation tool to the registered user satisfying a condition of the selected user attributes and bills the corresponding advertiser according to the selected user attribute.

9. An advertisement delivery method by a server managing communication between a user terminal of a registered user registered in advance and an advertiser terminal operable by an advertiser of an advertisement provided to the user terminal, wherein:
the server manages a registered user using a parking lot registered in advance,
the server provides a predetermined advertisement generation tool to the advertiser registering the parking lot as an advertisement delivery destination;
the server delivers information regarding an advertisement generated by the advertisement generation tool by the advertiser to the registered user associated with the parking lot which is the advertisement delivery destination; and
the server reflects a use situation of the advertisement generation tool and bills each advertiser.
